# EUROPÄISCHE PATENTSCHRIFT

(11) **EP 1 588 217 B1**
(45) Veröffentlichungstag und Bekanntmachung des Hinweises auf die Patenterteilung: **20.10.2010**
(21) Anmeldenummer: 03745249.7
(22) Anmeldetag: 22.03.2003
(51) Int. Cl.: H04N 5/225

(54) **KAMERASCHUTZGEHÄUSE FÜR EINE KAMERA**
PROTECTIVE HOUSING FOR A CAMERA
BOITIER PROTECTEUR POUR APPAREIL DE PRISES DE VUE

(30) Priorität: 28.03.2002 DE 10214316
(43) Veröffentlichungstag der Anmeldung: 26.10.2005
(73) Patentinhaber: Lauterbach, Folker, 4855 Bad Bentheim (DE)
(72) Erfinder: Lauterbach, Folker, 4855 Bad Bentheim (DE)
(74) Vertreter: Kayser, Christoph
(86) Internationale Anmeldenummer: PCT/DE2003/000958
(87) Internationale Veröffentlichungsnummer: WO 2003/083569

(56) Entgegenhaltungen:
- DE-A1- 19 947 655
- US-A- 6 111 599

## Beschreibung

Die vorliegende Erfindung betrifft ein Kameraschutzgehäuse für eine Kamera gemäß Anspruch 1.

Aus dem allgemeinen Stand der Technik sind zahlreiche Kameraschutzgehäuse bekannt. Bekannt sind z.B: Ledertaschen oder elastomere Taschen zum Schutz mobiler Kameras gegenüber Staub und Feuchtigkeit. Solche Schutzgehäuse müssen geöffnet werden, um das Objektiv freizugeben und können daher nur verwendet werden, wenn die Kamera nicht im Einsatz ist.

Bekannt sind aber auch transparente Kunststoffgehäuse, in denen Kameras funktionsbereit aufbewahrt und auch ohne Öffnung des Gehäuses benutzt werden können. Solche Kunststoffgehäuse werden z.B. am Strand zum Schutz gegenüber Sand und Spritzwasser verwendet.

Die vorgenannten Schutzgehäuse für Kameras sind aber ungeeignet für den professionellen Einsatz, z.B. im Rahmen von Zustandsüberwachungen von Industrieschornsteinen. Bei einem solchen Einsatz werden Kameras sehr hohen Rauchgastemperaturen und Rußpartikelkonzentrationen ausgesetzt.

Für den vorgenannten professionellen Einsatz sind ausschließlich stationär zu installierende Systeme bekannt, die mit von außen zugeführten Hilfsmitteln zur Kühlung arbeiten. Hier wird verwiesen auf US 6 111 599 und DE 199 47 655. Diese stationären Kamerasysteme sind nur während Stillstandszeiten einer zu überwachtenden Anlage einzusetzen. Eine solche Überwachung ist für den Betreiber einer solchen Anlage daher mit hohen Kosten verbunden.

In solchen bekannten stationären Kamerasystemen werden die mit industriellen Einsätzen verbundenen Probleme einer hohen Temperatur und eines Beschlagens der Optik durch den Einsatz von Luft oder Wasser als Kühlmittel bzw. von Druckluft gelöst. Diese Hilfsmittel werden bestehenden Kamerasystemen von außen zugeführt. Dies erfordert einerseits eine recht aufwendige Technik und führt andererseits in mobilen Kamerasystemen auch nicht zu dem gewünschten Erfolg, weil sich die Hilfsstoffe (Luft, Wasser) dort auf dem Weg ihrer Zuleitung zum Einsatzort der Kamera selbst aufheizen würden und ihre Kühlwirkung verlören. Darüber hinaus würde sich auch das Einsatzgewicht des mobilen Kamerasystems in einer Weise erhöhen, die dessen Einsatz unpraktikabel macht.

Die Aufgabe der vorliegenden Erfindung ist daher, ein Kameraschutzgehäuse zu schaffen, daß unter extremen äußeren klimatischen Bedingungen ohne externe Hilfsmittel ein Gehäuseinnenklima schafft, in welchem eine Kamera im mobilen Einsatz funktionsgerecht arbeiten kann.

Die Aufgabe wird erfindungsgemäß durch die Merkmale des einteiligen Anspruchs 1 gelöst.

Das erfindungsgemäße Kameraschutzgehäuse ist mit einer Kamera im mobilen Einsatz zu verwenden und arbeitet völlig autark mit Hilfe eines Wärmespeichermediums sowie einer Abschottung des Innengehäuses. Mit dem erfindungsgemäßen Kameraschutzgehäuses wird es erstmals möglich sein, den Innenteil von Industneschornsteinen ohne Unterbrechung des Anlagenbetriebs per Farbvideo zu überprüfen.

Weitere Vorteile der Erfindung ergeben sich aus den Merkmalen der Unteransprüche 2 bis 14.

Eine Ausführungsform der vorliegenden Erfindung wird im Folgenden anhand der Zeichnung näher beschrieben. Es zeigen:
- Fig. 1: eine schematische Darstellung im Längsschnitt durch ein Kameraschutzgehäuse gemäß vorliegender Erfindung;
- Fig. 2: eine schematische Darstellung im Querschnitt durch ein Kameraschutzgehäuse ge- mäß vorliegender Erfindung.

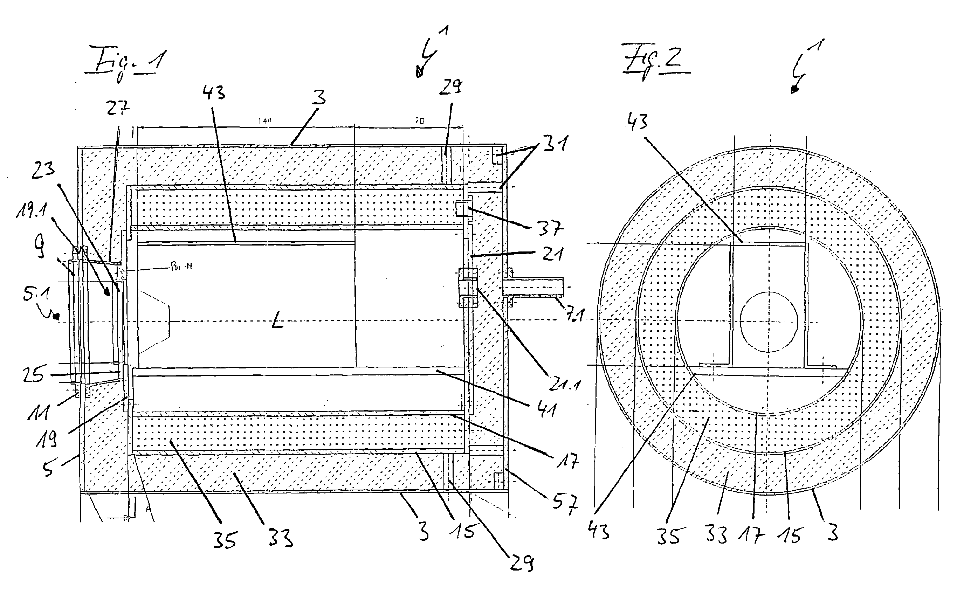

In Fig. 1 ist schematisch ein Kameraschutzgehäuse 1 der vorliegenden Erfindung im Längsschnitt dargestellt. Das Kameraschutzgehäuse 1 weist ein Außengehäuse auf, das sich im wesentlichen aus einer Außenwand 3, einer äußeren Frontplatte 5, einer äußeren Rückplatte 7 sowie einer transparenten äußeren Scheibe 9 und einer äußeren Fassung 11 für die äußere Scheibe 9 zusammensetzt. Die Außenwand 3 erstreckt sich in der vorliegenden Ausführungsform im wesentlichen konzentrisch zu einer Längsachse L. In der vorliegenden Ausführungsform wird die Außenwand 3 aus einem Edelstahlrohr mit rundem Querschnitt gebildet. Es ist aber in anderen Ausführungsformen auch möglich, daß die Außenwand 3 mehrteilig ausgebildet ist und dem Außengehäuse einen anders geformten Querschnitt verleiht, z.B. oval, dreieckig, viereckig oder mehreckig. Es ist auch möglich, daß andere Materialien für die Ausbildung der Außenwand verwendet werden. Voraussetzung ist nur, daß diese wärmebeständig und chemisch beständig sind, wobei der Grad der Beständigkeit abhängig ist vom jeweiligen Einsatzort.. Vorzugsweise ist die Außenwand 3 wenigstens auf ihrer der Umgebung ausgesetzten Außenseite poliert, um besser Wärme reflektieren zu können.

Die äußere Frontplatte 5 und die äußere Rückplatte 7 sind in der vorliegenden Ausführungsform ebenfalls aus Edelstahl und wenigstens auf ihren außen liegenden Flächen poliert. Die äußere Frontplatte 5 weist eine äußere Öffnung 5.1 auf. In der vorliegenden Ausführungsform ist die äußere Öffnung 5.1 kreisrund ausgebildet. In anderen Ausführungsformen kann die äußere Öffnung 5.1 aber auch beliebige andere Formen aufweisen. Die äußere Öffnung 5.1 ist mit der äußeren Scheibe 9 verschlossen. Die äußere Scheibe 9 sitzt in der äußeren Fassung 11 und wird durch diese in Position gehalten. Die äußere Fassung 11 ist gasdicht ausgebildet und mit der äußeren Frontplatte 5 fest aber lösbar verbunden. In der vorliegenden Ausführungsform ist die äußere Fassung 11 mit der äußeren Frontplatte 5 verschraubt. Die äußere Scheibe 9 ist chemisch beständig ausgebildet und besteht in der vorliegenden Ausführungsform aus Borosilikatglas.

An der äußeren Frontplatte 5 kann ein Beleuchtungsring (nicht dargestellt) aus Edelstahl um die äußere Scheibe 9 herum angebracht sein, an welchem mehrere Beleuchtungselemente, z.B. Halogenlampen, angeordnet sind. Eine Stromversorgung erfolgt dann durch eine innere Verkabelung.

Die äußere Rückplatte 7 weist eine Kabeldurchführung 7.1 auf. Die Kabeldurchführung 7.1 ist in der vorliegenden Ausführungsform aus einem hitzebeständigen Kunststoff, z.B. PEEK, könnte aber auch aus Edelstahl oder anderen hitzebeständigen Materialien bestehen. Die Kabeldurchführung 7.1 dient zur Durchführung von Stromkabeln, z.B. zur Stromversorgung einer in dem Kameraschutzgehäuse 1 angeordneten Kamera (nicht dargestellt) oder auch der oben beschriebenen Beleuchtungselemente (nicht dargestellt).

Die äußere Frontplatte 5 und die äußere Rückplatte 7 sind in der vorliegenden Ausführungsform an dem vorderen bzw. hinteren Ende des die Außenwand 3 bildenden Edelstahlrohres mit diesem verschraubt oder in anderer Weise lösbar verbunden. In anderen Ausführungsformen ist es auch möglich, daß entweder nur die äußere Frontplatte 5 oder nur die äußere Rückplatte 7 mit dem jeweiligen Ende der Außenwand 3 verschraubt oder lösbar verbunden ist und das jeweils andere Plattenelement 5 oder 7 mit dem jeweiligen Ende der Außenwand 3 unlösbar verbunden ist, z.B. verschweißt ist.. In der äußeren Rückplatte 7 kann eine gasdicht eingeschraubte Trockenpatrone (nicht dargestellt) angeordnet sein, die mittels Kapillarröhre mit dem Inneren des Kammeraschutzgehäuses 1 verbunden ist.

An einer Außenseite des Außengehäuses sind auch Befestigungspunkte (nicht dargestellt) für eine Abseiltechnik vorgesehen. In der Regel werden solche Befestigungspunkte an einer Oberseite des aus der Außenwand 3 gebildeten Edelstahlrohres als Hakenösen ausgebildet sein, die ein Abseilkabel aufnehmen können. Solche Befestigungspunkte zum Abseilen und Positionieren von Gegenständen sind in der Abseiltechnik allgemein bekannt und werden daher hier nicht näher beschrieben.

Das Kameraschutzgehäuse 1 weist auch ein Innengehäuse auf, daß sich im wesentlichen aus einer äußeren Wand 15, einer inneren Wand 17, einer inneren Frontplatte 19, einer inneren Rückplatte 21, einer inneren Scheibe 23 und einer inneren Fassung 25 für die innere Scheibe 23 zusammensetzt. Die äußere Wand 15 und die innere Wand 17 erstreckt sich in der vorliegenden Ausführungsform im wesentlichen konzentrisch zu der Längsachse L. In der vorliegenden Ausführungsform werden die äußere Wand 15 und die innere Wand 17 jeweils aus einem Aluminiumrohr mit rundem Querschnitt gebildet. Es ist aber in anderen Ausführungsformen auch möglich, daß die äußere Wand 15 und die innere Wand 17 mehrteilig ausgebildet sind und dem Innengehäuse einen anders geformten Querschnitt verleihen, z.B. oval, dreieckig, viereckig oder mehreckig. Es ist auch möglich, daß andere Materialien für die Ausbildung der Außenwand verwendet werden. Voraussetzung ist, daß diese gut wärmeleitend sind.

Die innere Frontplatte 19 und die innere Rückplatte 21 sind in der vorliegenden Ausführungsform ebenfalls aus Aluminium. Die innere Frontplatten 19 weist eine innere Öffnung 19.1 auf. In der vorliegenden Ausführungsform ist die innere Öffnung 19.1 kreisrund ausgebildet. In anderen Ausführungsformen kann die innere Öffnung 19.1 aber auch beliebige andere Formen aufweisen. Die innere Öffnung 19.1 ist mit der inneren Scheibe 23 verschlossen. Die innere Scheibe 23 sitzt in der inneren Fassung 25 und wird durch diese in Position gehalten. Die innere Fassung 25 ist gasdicht ausgebildet und mit der inneren Frontplatte 19 fest aber lösbar verbunden. In der vorliegenden Ausführungsform ist die innere Fassung 25 mit der inneren Frontplatte 19 verschraubt. Die innere Scheibe 23 ist als Wärmeschutzglas ausgebildet.

Die innere Rückplatte 21 weist einen gasdichten Steckverbinder 21.1 auf. Der gasdichte Steckverbinder 21.1 ist in Verbindungsrichtung mit der Kabeldurchführung 7.1 ausgerichtet und besteht aus hitzebeständigen Materialien. Die stromversorgenden Kabel werden durch die Kabeldurchführung 7.1 hindurchgeführt und in den Steckverbinder 21.1 gesteckt.

Die innere Frontplatte 19 und die innere Rückplatte 21 sind in der vorliegenden Ausführungsform an dem vorderen bzw. hinteren Ende der die äußere Wand 15 und die innere Wand 17 bildenden Aluminiumrohre mit diesen verschraubt oder in anderer Weise lösbar verbunden. In anderen Ausführungsformen ist es auch möglich, daß entweder nur die innere Frontplatte 19 oder nur die innere Rückplatte 21 mit dem jeweiligen Ende der äußeren Wand 15 und der inneren Wand 17 verschraubt oder lösbar verbunden ist und das jeweils andere Plattenelement 19 oder 21 mit den jeweiligen Enden der äußeren Wand 15 und der inneren Wand 17 unlösbar verbunden ist.

Die äußere Wand 15 des Innengehäuses ist in räumlichen Abstand zu der Außenwand 3 des Außengehäuses angeordnet. Ebenso sind die innere Frontplatte 19 und die innere Rückplatte 21 in einem Abstand zu der äußeren Frontplatte 5 bzw. Rückplatte 7 angeordnet. Der Abstand beträgt in der vorliegenden Ausführungsform etwa 1/8 des Durchmessers des von der Außenwand 3 gebildeten Edelstahlrohres. Dieses Maß soll nur eine ungefähre Größenordnung wiedergeben. Der Abstand zwischen den Frontplatten 5 und 19, zwischen den Rückplatten 7 und 21 oder zwischen den Wänden 15 und 3 kann durchaus unterschiedlich sein. Der Abstand wird durch mehrere Abstandhalter 27, 29, 31 eingestellt. Die Wahl und Einstellung des Abstandes ist insbesondere abhängig davon, daß die innere Öffnung 19.1 und die äußere Öffnung 5.1 miteinander ausgerichtet sind, derart, daß beide Öffnungen 19.1 und 5.1 in ihrer Gesamtheit eine Gehäuseöffnung bilden. In der vorliegenden Ausführungsform ist die Gehäuseöffnung konzentrisch zur Längsachse L ausgebildet.

Der Abstandhalter 27 ist in der vorliegenden Ausführungsform aus dem Kunststoff PEEK ausgebildet und an der äußeren Frontplatte 5 angeschraubt. Dieser Abstandhalter 27 begrenzt die Gehäuseöffnung 5.1, 19.1 zwischen der inneren Fassung 25 und der äußeren Fassung 11. Der Abstandhalter 27 sowie die äußere Wand 15 und die Außenwand 3 umschließen einen äußeren Ringraum 33, in welchem ein Isoliermedium aus Feststoffen, z.B. Mineralwolle, zur Wärmeisolierung angeordnet ist.

Der Abstand zwischen der Außenwand 3 und der äußeren Wand 15 wird durch den Abstandhalter 29 gehalten und der Abstand zwischen der inneren und äußeren Rückplatte 21 bzw. 7 wird durch den Abstandhalter 31 gehalten.

Die innere Wand 17, die äußere Wand 15 sowie die innere Frontplatte 19 und die innere Rückplatte 21 begrenzen einen inneren Ringraum 35, in welchem ein Wärmespeichermedium angeordnet ist. Es können im Grunde alle dem Fachmann bekannten Wärmespeichermedien eingesetzt werden. In der vorliegenden Ausführungsform soll das Wärmespeichermedium auf der Basis von Paraffinen bestehen, und z.B ein Wärmeparaffin sein, wie dies unter der Marke RUBITHERM® von der Rubitherm GmbH, Hamburg, im Handel erhältlich ist.

In der inneren Rückplatte 21 ist eine Einfüllöffnung ausgebildet, die mit einem Verschlußstopfen 37 zu verschließen und zu öffnen ist.

In Fig. 2 ist sehr gut die konzentrische Anordnung des Edelstahlrohrs und der beiden inneren Aluminiumrohre zu erkennen. Die innere Wand 17 begrenzt zusammen mit der inneren Frontplatte 19 und der inneren Rückplatte 21 sowie der in der inneren Frontplatte 19 angeordneten inneren Scheibe 23 (Fig. 1) einen Innenraum 39. In diesem Innenraum 39 ist eine Koppelplatte 41 angeordnet und insbesondere an die innere Wand 17 geschweißt. Diese Koppelwand ist in der in den Figuren 1 und 2 dargestellten Arbeitsstellung horizontal ausgerichtet. Auf der Koppelplatte 41 ist ein Zusatzgehäuse 43 aus Aluminium angebracht. Das Zusatzgehäuse 41 dient zur Fixierung der Kamera (nicht dargestellt) und zur Ableitung der Kamera-Abwärme über die geschweißte Verbindung zwischen der Koppelplatte 41 und der inneren Wand 17 an das Innengehäuse.

Die Kamera kann über die jeweils geschraubten inneren und äußeren Frontplatten bzw. Rückplatte in das Zusatzgehäuse eingesetzt werden. Das Innengehäuse wird dann mit der eingesetzten Kamera im Außengehäuse positioniert und mit Hilfe der Abstandhalter positioniert. Schließlich werden die äußeren Frontplatte-und/oder die äußere Rückplatte an das Edelstahlrohr angeschraubt und das Kameraschutzgehäuse 1 an seinen Befestigungspunkten an die Abseiltechnlk angehängt.

Aufgrund der gasdichten Ausbildung findet mit dem erfindungsgemäßen Kameraschutzgehäuse kein wesentlicher Gasaustausch zwischen dem Innengehäuse und der Umwelt statt, so daß die Scheiben 9 und 23 nicht beschlagen.

## Patentansprüche

1. Kameraschutzgehäuse (1) für eine mobile Kamera, mit
- einem Außengehäuse (3, 5, 7, 9, 11),
- einem Innengehäuse (15, 17, 19, 21, 23, 25),
- einem zwischen dem Außengehäuse (3, 5, 7, 9, 11) und dem Innengehäuse (15, 17, 19, 21, 23, 25) ausgebildeten äußeren Ringraum (33), in welchem ein Isoliermedium zur Wärmeisolierung angeordnet ist,
wobei das Innengehäuse (15, 17, 19, 21, 23, 25) eine äußere Wand (15) und eine innere Wand (17) aufweist, die einen inneren Ringraum (35) begrenzen, in welchem ein Wärmespeichermedium zur Wärmespeicherung angeordnet ist,
- einer Gehäuseöffnung (5.1, 19.1), in welcher eine wärmeisolierende, lichtdurchlässige Scheibeneinheit (9, 23) angeordnet ist, und
- einer wärmeisolierten Kabeldurchführung (7.1).

2. Kameraschutzgehäuse nach Anspruch 1,
**dadurch gekennzeichnet,**
**daß** die Gehäuseöffnung (9, 23) im Außengehäuse (3, 5, 7, 9, 11) mit einer chemisch beständigen Scheibe (9) der lichtdurchlässigen Scheibeneinheit (3, 13) verschlossen ist.

3. Kameraschutzgehäuse nach Anspruch 1 oder 2,
**dadurch gekennzeichnet,**
**daß** Abstandhalter (27, 29, 31) vorgesehen sind, welche das Innengehäuse (15, 17, 19, 21, 23, 25) in einem vorbestimmten Abstand zum Außengehäuse (3, 5, 7, 9, 11) halten.

4. Kameraschutzgehäuse nach einem der vorstehenden Ansprüche,
**dadurch gekennzeichnet,**
**daß** das Isoliermedium eine Mineralwolle ist.

5. Kameraschutzgehäuse nach einem der vorstehenden Ansprüche,
**dadurch gekennzeichnet,**
**daß** das Wärmespeichermedium ein Wärmeparaffin ist.

6. Kameraschutzgehäuse nach einem der vorstehenden Ansprüche,
**dadurch gekennzeichnet,**
**daß** die Gehäuseöffnung (5.1, 19.1) im Außengehäuse (3, 5, 7, 9, 11) mit einer Scheibe (9) aus Borosilikatglas der Scheibeneinheit (9, 23) verschlossen ist.

7. Kameraschutzgehäuse nach einem der vorstehenden Ansprüche,
**dadurch gekennzeichnet,**
**daß** die Gehäuseöffnung (5.1, 19.1) im Innengehäuse (15, 17, 19, 21, 23, 25) mit einer Scheibe (23) aus Wärmeschutzglas der Scheibeneinheit (9, 23) verschlossen ist.

8. Kameraschutzgehäuse nach einem der vorstehenden Ansprüche,
**dadurch gekennzeichnet,**
**daß** die Scheibeneinheit (9, 23) mit einer gasdichten Fassung (11, 25) positioniert ist.

9. Kameraschutzgehäuse nach Anspruch 8,
**dadurch gekennzeichnet,**
**daß** die Scheibe (9) aus Borosilikatglas mit einer gasdichten Fassung (11) positioniert ist und die Scheibe (23) aus Wärmeschutzglas mit einer gasdichten Fassung (25) positioniert ist.

10. Kameraschutzgehäuse nach einem der Ansprüche 3 bis 9,
**dadurch gekennzeichnet,**
**daß** die Abstandhalter (27, 29, 31) aus einem Spezialkunststoff bestehen.

11. Kameragehäuse nach einem der vorstehenden Ansprüche,
**dadurch gekennzeichnet,**
**daß** das Innengehäuse (15, 17, 19, 21, 23, 25) zwei konzentrische Aluminiumrohre aufweist, die mit ihrem Umfang die äußere Wand (15) und die innere Wand (17) bilden, und daß das Innengehäuse (15, 17, 19, 21, 23, 25) eine innere Rückplatte (21) und eine innere Frontplatte (19) aufweist, die jeweils an einem Ende des Innengehäuses (15, 17, 19, 21, 23, 25) gasdicht mit den beiden Aluminiumrohren abgedichtet und verbunden sind.

12. Kameraschutzgehäuse nach einem der vorstehenden Ansprüche,
**dadurch gekennzeichnet,**
**daß** das Außengehäuse (3, 5, 7, 9, 11) ein Edelstahlrohr aufweist, an dessen vorderen und hinteren Ende jeweils eine äußere Frontplatte (5) bzw. eine äußere Rückplatte (7) gasdicht verbunden ist.

13. Kameraschutzgehäuse nach Anspruch 11 und 12,
**dadurch gekennzeichnet,**
**daß** in der inneren und äußeren Frontplatte (5, 19) die Gehäuseöffnung (5.1, 19.1) mit der Scheibeneinheit (9, 23) ausgebildet ist.

14. Kameraschutzgehäuse nach einem der vorstehenden Ansprüche,
**dadurch gekennzeichnet,**
**daß** im Innengehäuse (15, 17, 19, 21, 23, 25) ein Zusatzgehäuse (43) ortsfest angeordnet ist, in welch
em eine Kamera aufgenommen werden kann.

## Claims

1. A protective housing (1) for a mobile camera, comprising
- an outer housing (3, 5, 7, 9, 11),
- an inner housing (15, 17, 19, 21, 23, 25),
- an outer annular ring chamber (33) formed between the outer housing (3, 5, 7, 9, 11) and the inner housing (15, 17, 19, 21, 23, 25), in which an insulation medium for thermal insulation is arranged,
wherein the inner housing (15, 17, 19, 21, 23, 25) has an outer wall (15) and an inner wall (17) bordering an inner annular chamber (35), in which a thermal accumulator medium for thermal accumulation is arranged,
- a housing opening (5.1, 19.1), in which a thermal-insulating, translucent disk unit (9, 23) is arranged, and
- a thermal-insulating cable grommet (7.1).

2. The protective housing for a camera according to claim 1,
**characterized in**
**that** the housing opening (9, 23) in the outer housing (3, 5, 7, 9, 11) is closed with a chemically resistant disk (9) of the translucent disk unit (3, 13).

3. The protective housing for a camera according to claim 1 or claim 2,
**characterized in**
**that** spacers (27, 29, 31) are provided, which keep the inner housing (15, 17, 19, 21, 23, 25) in a predetermined distance to the outer housing (3, 5, 7, 9, 11).

4. The protective housing for a camera according to any one of the preceding claims,
**characterized in**
**that** the insulation medium is a mineral wool.

5. The protective housing for a camera according to any one of the preceding claims,
**characterized in**
**that** the thermal accumulator medium is a thermal paraffin.

6. The protective housing for a camera according to any one of the preceding claims,
**characterized in**
**that** the housing opening (5.1, 19.1) in the outer housing (3, 5, 7, 9, 11) is closed with a disk (9) made of borosilicate glass of the disk unit (9, 23).

7. The protective housing for a camera according to any
one of the preceding claims,
**characterized in**
**that** the housing opening (5.1, 19.1) in the inner housing (15, 17, 19, 21, 23, 25) is closed with a disk (23) made of thermal insulation glass of the disk unit (9, 23).

8. The protective housing for a camera according to any one of the preceding claims,
**characterized in**
**that** the disk unit (9, 23) is positioned with a gastight mounting (11, 25).

9. The protective housing for a camera according to claim 8,
**characterized in**
**that** the disk (9) made of borosilicate glass is positioned with a gastight mounting (11) and the disk (23) made of thermal insulation glass is positioned with a gastight mounting (25).

10. The protective housing for a camera according to any one of the claims 3 to 9,
**characterized in**
**that** the spacers (27, 29, 31) consist of a special plastic.

11. The protective housing for a camera according to any one of the preceding claims,
**characterized in**
**that** the inner housing (15, 17, 19, 21, 23, 25) has two concentric aluminum tubes forming with their periphery the outer wall (15) and the inner wall (17), and that the inner housing (15, 17, 19, 21, 23, 25) has an inner back plate (21) and an inner front plate (19), each of them sealed and connected in a gastight manner with the two aluminum tubes at a respective end of the inner housing (15, 17, 19, 21, 23, 25).

12. The protective housing for a camera according to any one of the preceding claims,
**characterized in**
**that** the outer housing (3, 5, 7, 9, 11) has a stainless steel tube, at the front and back end of which an outer front plate (5) and an outer back plate (7), respectively, are connected in a gastight manner.

13. The protective housing for a camera according to claim 11 and claim 12,
**characterized in**
**that** in the inner and the outer front plate (5, 19) the housing opening (5.1, 19.1) with the disk unit (9, 23) is formed.

14. The protective housing for a camera according to any one of the preceding claims,
**characterized in**
**that** in the inner housing (15, 17, 19, 21, 23, 25), an additional housing (43) is arranged stationary, in which a camera can be housed.

## Revendications

1. Caisson de protection pour caméra (1) pour une caméra mobile, comportant
- un caisson extérieur (3, 5, 7, 9, 11),
- un caisson intérieur (15, 17, 19, 21, 23, 25),
- un espace annulaire (33) extérieur réalisé entre le caisson extérieur (3, 5, 7, 9, 11) et le caisson intérieur (15, 17, 19, 21, 23, 25), dans lequel un milieu isolant est disposé à des fins d'isolation thermique,
moyennant quoi le caisson intérieur (15, 17, 19, 21, 23, 25) présente une paroi extérieure (15) et une paroi intérieure (17), qui délimitent un espace annulaire intérieur (35), dans lequel un milieu d'accumulation thermique est disposé à des fins d'accumulation thermique,
- une ouverture de caisson (5.1, 19.1), dans laquelle une unité de vitre (9, 23) translucide, thermiquement isolante est disposée, et
- un passage de câble (7.1) thermiquement isolant.

2. Caisson de protection pour caméra selon la revendication 1,
**caractérisé en ce que**
l'ouverture de caisson (9, 23) dans le caisson extérieur (3, 5, 7, 9, 11) est fermée par une vitre (9) résistante aux substances chimiques de l'unité de vitre (3, 13) translucide.

3. Caisson de protection pour caméra selon la revendication 1 ou 2,
**caractérisé en ce que**
des écarteurs (27, 29, 31) sont prévus, lesquels maintiennent le caisson intérieur (15, 17, 19, 21, 23, 25) à une distance prédéterminée par rapport au caisson extérieur (3, 5, 7, 9, 11).

4. Caisson de protection pour caméra selon une des revendications précédentes,
**caractérisé en ce que**
le milieu isolant est une laine minérale.

5. Caisson de protection pour caméra selon une des revendications précédentes,
**caractérisé en ce que**
le milieu d'accumulation thermique est une paraffine sujette aux variations thermiques.

6. Caisson de protection pour caméra selon une des revendications précédentes,
**caractérisé en ce que**
l'ouverture de caisson (5.1, 19.1) dans le caisson extérieur (3, 5, 7, 9, 11) est fermée par une vitre (9) en verre de borosilicate de l'unité de vitre (9, 23).

7. Caisson de protection pour caméra selon une des revendications précédentes,
**caractérisé en ce que**
l'ouverture de caisson (5.1, 19.1) dans le caisson intérieur (15, 17, 19, 21, 23, 25) est fermée par une vitre (23) en verre thermo-isolé de l'unité de vitre (9, 23).

8. Caisson de protection pour caméra selon une des revendications précédentes,
**caractérisé en ce que**
l'unité de vitre (9, 23) est positionnée par une monture (11, 25) étanche aux gaz.

9. Caisson de protection pour caméra selon la revendication 8,
**caractérisé en ce que**
la vitre (9) en verre de borosilicate est positionnée par une monture (11) étanche aux gaz et la vitre (23) en verre thermo-isolé est positionnée par une monture (25) étanche aux gaz.

10. Caisson de protection pour caméra selon une des revendications 3 à 9,
**caractérisé en ce que**
les écarteurs (27, 29, 31) sont constitués d'un plastique spécial.

11. Caisson de protection pour caméra selon une des revendications précédentes,
**caractérisé en ce que**
le caisson intérieur (15, 17, 19, 21, 23, 25) présente deux tubes d'aluminium concentriques, qui forment par leur circonférence la paroi extérieure (15) et la paroi intérieure (17), et **en ce que** le caisson intérieur (15, 17, 19, 21, 23, 25) présente une plaque arrière intérieure (21) et une plaque avant intérieure (19), qui sont respectivement isolées de manière étanche aux gaz à une extrémité du caisson intérieur (15, 17, 19, 21, 23, 25) et reliées aux deux tubes d'aluminium.

12. Caisson de protection pour caméra selon une des revendications précédentes,
**caractérisé en ce que**
le caisson extérieur (3, 5, 7, 9, 11) présente un tube d'acier inoxydable, aux extrémités avant et arrière duquel une plaque avant extérieure (5) ou une plaque arrière extérieure (7) sont respectivement reliées de manière étanche aux gaz.

13. Caisson de protection pour caméra selon la revendication 11 et 12,
**caractérisé en ce que**
dans la plaque avant intérieure et extérieure (5, 19), l'ouverture de caisson (5.1, 19.1) est réalisée avec l'unité de vitre (9, 23).

14. Caisson de protection pour caméra selon une des revendications précédentes,
**caractérisé en ce que**
dans le caisson intérieur (15, 17, 19, 21, 23, 25), un caisson supplémentaire (43) est disposé de manière stationnaire, dans lequel une caméra peut être renfermée.
